# EUROPEAN PATENT SPECIFICATION

(11) **EP 2 994 567 B1**
(45) Date of publication and mention of the grant of the patent: **27.09.2023**
(21) Application number: 14795236.0
(22) Date of filing: 30.04.2014
(51) Int. Cl.: D21C 9/06, B01D 33/067, D21C 9/18

(54) **AN APPARATUS FOR WASHING AND/OR DEWATERING PULP AND AN METHOD FOR MOUNTING AN INSERT IN AN APPARATUS FOR WASHING AND DEWATERING PULP**
VORRICHTUNG ZUM WASCHEN UND/ODER ZUR ENTWÄSSERUNG VON ZELLSTOFF UND EIN VERFAHREN ZUM EINBAU EINES EINSATZES IN EINE VORRICHTUNG ZUM WASCHEN UND/ODER ZUR ENTWÄSSERUNG VON ZELLSTOFF
APPAREILS DE LAVAGE ET/OU DÉSHYDRATATION DE LA PULPE ET MÉTHODE DE MONTAGE D'UN INSERT DANS UN APPAREIL DE LAVAGE ET/OU DÉSHYDRATATION DE LA PULPE

(30) Priority: 07.05.2013 SE 1350555
(43) Date of publication of application: 16.03.2016
(73) Proprietor: Valmet AB, 851 94 Sundsvall (SE)
(72) Inventor: LÖVGREN, Hans, S-855 90 Sundsvall (SE); FÄLLMAN, Johan, S-852 38 Sundsvall (SE)
(74) Representative: Groth & Co. KB
(86) International application number: PCT/SE2014/050538
(87) International publication number: WO 2014/182224

(56) References cited:
- WO-A1-94/26388
- WO-A1-98/54401
- WO-A1-2010/101518
- WO-A1-2010/138056
- WO-A1-2011/075041
- WO-A1-2011/075041
- WO-A1-2013/055284
- WO-A1-2013/055284
- SE-C2- 536 314
- US-A- 3 014 589

## Description

### TECHNICAL FIELD

The present invention relates to a rotatable press roll and an apparatus for washing and/or dewatering pulp and to a method for mounting an insert in an apparatus for washing and/or dewatering pulp.

### BACKGROUND OF THE INVENTION

Fibre lines producing cellulose-based products comprise some type of washing equipment for separating a liquid of cooking from pulp. Later on in the process, washing equipment is also provided to separate bleaching liquid after bleaching steps. There are a number of different types of washing equipment operating according to different principles.

When producing cellulose-based products, a roll press is frequently used for washing and/or dewatering cellulose-containing pulp. The roll press comprises two co-operating and counter-rotating press rolls, each having a permeable outer surface, a so called mantle surface, whereby the outer surface is permeable to liquid pressed out of the pulp. The pulp is deposited on the permeable outer surface and pressed in a roll nip, or press nip, between the press rolls, whereby liquid, called filtrate, is pressed out of the pulp. Normally, the roll press also includes one or more washing zones prior to the press nip. One example of such a roll press is disclosed in US 3,980,518, where the axes of rotation of the press rolls are in substantially the same horizontal plane, and the pulp is passing the press nip between the press rolls in a vertical direction, from below upwards.

Another known washing equipment is a drum washer, where the cellulose-containing pulp is deposited and dewatered on a single rotating filter drum with a permeable outer surface, after the addition of washing liquid, which displaces the liquid remaining on the pulp web after the preceding process step, for example a cooking step or bleaching step. The static pressure causes the contaminated liquid, called filtrate, to pass through the outer surface permeable to liquid. A further development of the original drum washer is the pressurized displacement washer, where the filtrate, under overpressure, is forced to pass through the permeable outer surface.

Both the drum washer and the roll press are often provided with a plurality of filtrate channels which extend along an axial extension of the roll, or drum, and are provided inwardly of the permeable outer surface. The filtrate channels receive the liquid, which has been transported through the outer surface, from the pulp situated on the outer surface, and the liquid is then transported and discharged from the filtrate channels to a filtrate container connected thereto.

When large amounts of filtrate are involved, which is common, especially with regard to rolls, or drums, having a long axial extension, rewetting is a problem which arises, i.e. that the filtrate which have been transported to the filtrate channels flows back through the outer surface and dilutes the washed and/or pressed pulp.

US 5,470,471 discloses a press roll where baffle plates are anchored inside the filtrate channel of the press roll in order to prevent the rewetting of the pulp. Instead of bolting or welding the baffle plates, it is suggested to provide axial grooves, into which the plates may be axially inserted. However, it can be difficult to remove, and also insert, the baffle plates from/into the filtrate channels, because of the friction between the baffle plate and the groove. To equip an already installed and existing press roll with these kinds of baffle plates can be a complicated and expensive procedure.

US 4,581,139 discloses a baffle insert member which is inserted in a filtrate channel of a rotary vacuum drum filter in order to prevent the rewetting. The insert member is described as replaceable, and a purpose is to equip existing drum filters with a rewetting prevention means. However, the transverse extension of the suggested insert member corresponds to the inner cross-section of the filtrate channel, and in order to insert the insert member, at the end of the drum the entry of the filtrate channel must have the same cross-section as the rest of the filtrate channel. This is not always the case since the drum may have end structures which limit the entry of the filtrate channel. Since the transverse extension of the suggested insert member substantially corresponds to the inner cross-section of the filtrate channel, it may also be difficult to remove, and also to insert, the insert member from/into the filtrate channel because of the friction between the insert member and the inner walls of the filtrate channel, especially with regard to drums having a substantial axial extension.

WO 2010/138059 discloses a further version of an insert member with a spring that can hold a filtrate barrier in two different positions. It works well, but is complicated and expensive to manufacture.

US 6,311,849 discloses filtrate channels having angled inlets made of non-supporting walls. Manufacture is difficult. Also, the radial walls between the channels become very short due to the angled inlet. Thus, there is not much room for the filtrate inside the channels. Furthermore, peripheries of the press rolls and thus the pulp are moving downwards through the nip. This means that the filtrate is moved by the press rolls in the same direction as the gravity flow. Especially if the radial walls also has holes, that means that the filtrate channels will become more and more filled below the nip and this will increase the danger of rewetting. Eventually, when the filtrate channels rotates further below the nip, the openings of the angled inlets will point down and the filtrate will flow out again through said inlets, instead of flowing out through the filtrate channels.

WO2013/055 284 discloses a device for preventing rewetting of cellulose pulp in a roll press for washing or dewatering of pulp. The filtrate channel has an axially extending intermediate beam portion interconnecting filtrate barrier and support unit to form a closed shape of a anti-rewet beam.

An example of how a mantle element of a press roll may look is seen in US 2005/0230306, where the mantle element comprises a plurality of spaced apart rings and a shell with holes acting as the permeable outer surface. The rings are shrunk or welded directly onto walls acting as support ribs, which gives the danger of stress and cracks in the mantle element due to the small area of the support ribs, not giving any real support. In WO 2010/138059 and WO 2006/068569 can be seen small bars welded to the mantle element, to which bars the support ribs are welded. This increases the area and thus decreases the danger of stress and cracks. On the other hand, it makes the manufacture more complicated, since it requires a lot of welding.

### SUMMARY OF THE INVENTION

An object of the invention is to solve the above-mentioned problems with an invention as in the appended claims. An apparatus for washing and/or dewatering pulp according to the present invention is defined in the current claim 1. Furthermore, a method for mounting an insert in an apparatus for washing and/or dewatering pulp is defined in the present claim 8.

The advantages are that the rewetting will be decreased with simple measures which also can easily be used to improve old apparatuses.

In certain embodiments, manufacture is simplified, wear is decreased and also stability and strength increased.

Further advantageous embodiments of the device according to the present invention and further advantages with the present invention emerge from the detailed description of embodiments.

### BRIEF DESCRIPTION OF THE DRAWINGS

The present invention will now be described, for exemplary purposes, in more detail by way of embodiments and with reference to the enclosed drawings, in which:
Fig. 1 is a schematic partial side view of a prior art roll press during operation;
Fig. 2 is a schematic side view of an embodiment according to the present invention;
Fig. 3a and b are more detailed side view of an embodiment according to the present invention.
Fig. 4 is a schematic flow chart showing the general steps of a method according to the present invention.
Fig. 5 is a detailed side view of an embodiment of the present invention.
Fig. 6 is a detailed side view of another embodiment according to the present invention.

### DETAILED DESCRIPTION OF PREFERRED EMBODIMENTS

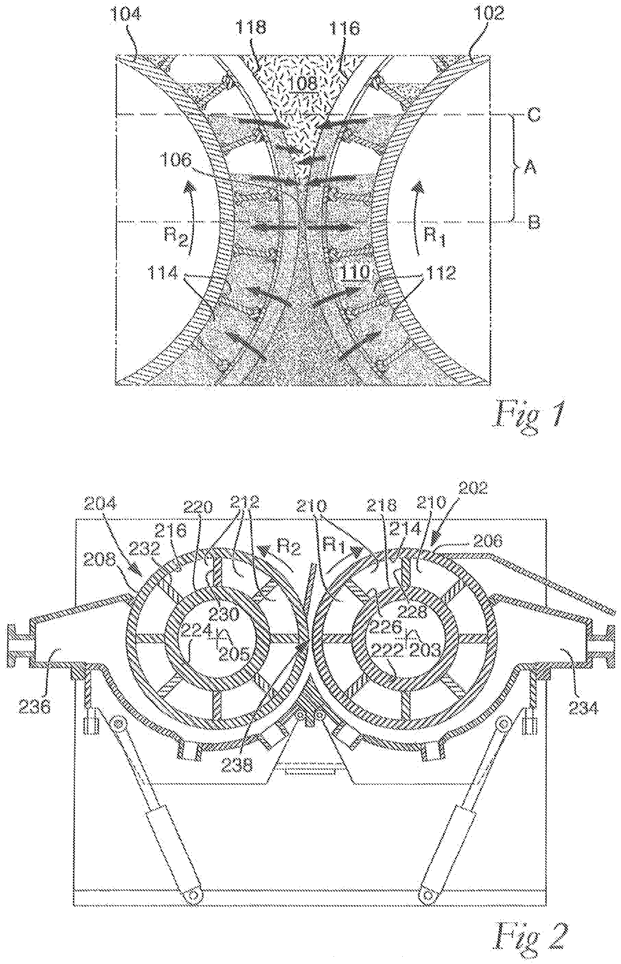

Fig. 1 illustrates rewetting with regard to a roll press having two co-operating and counter-rotating press rolls 102, 104, rotating in directions of rotation R₁ and R₂, respectively, Pulp 108 is fed in the directions of rotation R1, R2 of the press rolls 102, 104 and up through a press nip 106 formed between the press rolls 102, 104. In the press nip 106 liquid, called filtrate, is pressed from the pulp through a permeable mantle element 116, 118 of each press roll 102, 104 into a number of filtrate channels 112, 114.

After the press nip 106, the pressure of the pulp 108 decreases and filtrate 110 that has not been discharged from filtrate channels 112, 114 returns out through the mantle element 116, 118, wets and dilutes the pulp 108. In Fig. 1, the rewetting is illustrated by arrows from the filtrate channels 112, 114 to a rewetting zone A above the press nip 106. The pulp 108 has a maximum dryness at a first point B prior to the rewetting zone A, whereas the pulp 108 leaving the roll press has a reduced dryness at a point C because of the rewetting. The problem would be even more pronounced if the press rolls 102, 104 were rotating in the opposite direction, i.e. so that the pulp 108 passes the nip 106 downwards.

Fig. 2 shows schematically an embodiment of an apparatus for processing cellulose-containing pulp by washing and/or pressing pulp in which the invention is implemented. The apparatus comprises a first press roll 202, and a second press roll 204, each being rotatable about an axis of rotation 203, 205 in a direction of rotation R₁, R₂, and having a mantle element 206, 208 with a permeable outer and inner surface. The outer surface is preferably perforated, i.e. provided with apertures, whereby the outer surfaces are permeable to filtrate pressed out of the pulp. Inside the outer surface, the mantle element 206, 208 is further preferably provided with circumferential frame rings distributed and spaced apart along the axis of each press roll 202, 204, which rings give the inner surface of the mantle element 206, 208. Other variants of a mantle element 206, 208 are conceivable.

Each press roll 202, 204 is provided with a plurality of filtrate channels 210, 212 which extend along the axial extension of the each press roll 202, 204 and are provided inwardly of the mantle element 206, 208 to lead evacuated filtrate away. Each filtrate channel 210, 212 is defined by a radially outer wall 214, 216, provided on the mantle element 206, 208, a radially inner wall 218, 220 provided on an axial inner drum 222, 224, and two radial walls 226, 228, 230, 232.

Each wall extends along the axial extension of each press roll 202, 204. The radially outer wall 214, 216 is provided in the mantle element 206, 208 and is permeable to liquid. The mantle element 206, 208 is supported by the above-mentioned radial walls 226, 228, 230, 232 working as support ribs. Each filtrate channel 210, 212 is provided with at least one outlet for discharging liquid therefrom, in ways known to the skilled person.

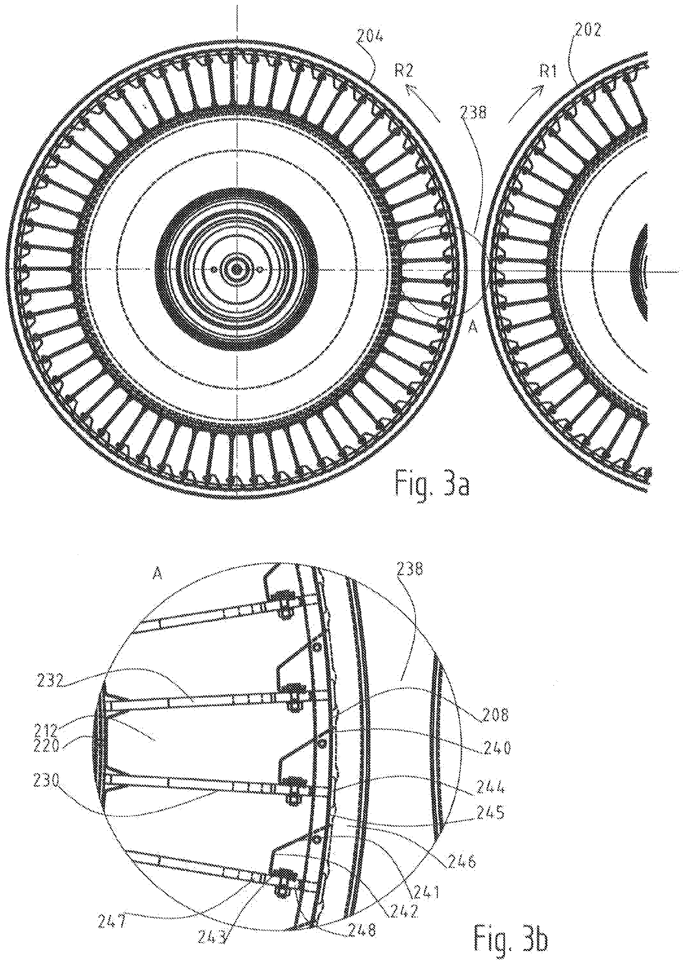

Preferably, the radial walls 226, 228, 230, 232 are also provided with holes (shown in Fig 3b), in order to enable the filtrate also to fall down between the filtrate channels 210, 212 to decrease overflow in the filtrate channels 210, 212.

The two press rolls 202, 204 are arranged to rotate in opposite directions, the first press roll 202 being arranged to rotate in a clockwise direction R₁, and the second press roll 204 being arranged to rotate in a counter clockwise direction R₂. The apparatus is arranged to receive the pulp on the outer surface of each press roll 202, 204 from two pulp distribution devices 234, 236 adapted to deposit the pulp on the outer surface 206, 208, and the pulp is fed in the direction of rotation of the press rolls 202, 204 up through a press nip or roll nip 238 defined by and between the press rolls 202, 204. The pulp is then pressed in the press nip 238.

At least in the region of the press nip 238 liquid is removed from the pulp and transported from the pulp to the filtrate channels 210, 212 through the mantle element 206, 208. The axes of rotation 203, 205 of the press rolls 202, 204 are in substantially the same horizontal plane, and the apparatus is arranged to feed the pulp through the press nip 238 in a substantially vertical direction from below and upwards. Along the path of the pulp, between each pulp distribution device 234, 236 and the press nip 238, one or more wash zones may be provided in ways known to the person skilled in the art.

In Fig. 3a and b is shown the apparatus in Fig. 2 with details about an embodiment of the invention for preventing rewetting.

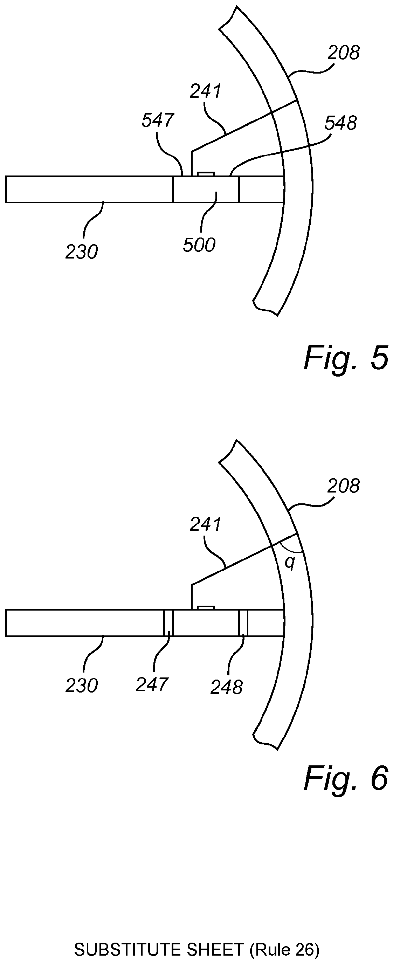

At least one filtrate channel 210, 212 is provided with an inlet 245 and an anti-rewet insert 240 with an oblique wall 241 provided between a first radial wall 226, 230 and the mantle element 206, 208. The oblique wall 241 is pointing in the same direction as the direction of rotation R₁, R₂. Thus, the oblique wall 241 forms an angle to the mantle element 206, 208 to prevent the flow of liquid from the filtrate channel 210, 212 to the outer surface of the mantle element 206, 208 during rotation of the press rolls 202, 204. In Fig. 6, a detailed view of an embodiment of the present invention is shown where the oblique wall 241 (or an imaginary extension of the oblique wall through the mantle element) forms an angle q to the mantle element 206, 208 between 20 - 70 degrees, and preferably between 25 and 65 degrees. The anti-rewet insert 240 may also be provided with a fastening wall 243 fastened in the first radial wall 226, 230. To facilitate the fastening the anti-rewet insert 240 may also be provided with an intermediate wall 242 between the fastening wall 243 and the oblique wall 241. The intermediate wall 242 is preferably perpendicular to the first radial wall 226, 230. The intermediate wall 242 also enables to have a shorter oblique wall 241, so that a larger area of the first radial wall 226, 230 and a larger volume of the filtrate channel 210, 212 may be used and, thus, that the filtrate channel 210, 212 can hold more filtrate.

It is possible to have a fixed oblique wall 241 e.g. as part of a radial wall 226, 228, 230, 232, instead of having a separate anti-rewet insert 240. But the manufacture is much easier if the oblique wall 241 is a separate anti-rewet insert 240, which may then be fastened after that the inner weldings etc towards the radially inner wall 218, 220 are made. The insert 240 may be fastened by e.g. welding, screwing, bolting or other mechanical fastening. If the insert 240 is thought as an exchangeable spare part, then screwing or bolting is preferred. In order to simplify, the screwing or bolting may then e.g. be made only at the ends, and using only e.g. pins or hooks in-between. Another advantage with using an insert 240 is that the insert 240 may easily be inserted also into existing old press rolls as an improvement.

Filtrate will normally flow downwards due to the gravity. However, in the present invention, since the peripheries of the press rolls 202, 204 are moving upwards in the nip 238 and the oblique walls 241 are also pointing upwards, the press rolls 202, 204 will work as turbine wheels or pumps and lift the filtrate in the opposite direction to that the gravity works. Furthermore, when the filtrate channels 210, 212 rotate further above the nip 238, the filtrate will be pressed inwards by the oblique walls 241. This prevents the filtrate from flowing out again through the inlets 245.

Because of this, the angle of the oblique wall 241 need not be so large and thus the oblique wall 241 need not go all the way to a second radial wall 228, 232 in the same filtrate channel 210, 212, but the inlet 245 may be between the oblique wall 241 and the second radial wall 228, 232. This is preferable, since then the filtrate will enter the intended filtrate channel 210, 212 at once through said inlet 245 and it is not necessary to have large outer holes 248 in the second radial wall 228, 232 outside the oblique wall 241, just in order for the filtrate to enter the filtrate channel 210, 212 below.

In the present embodiment, however, small outer holes 248 in the radial wall 226, 228, 230, 232 outside the oblique wall 241 may be beneficent, even though they are small. The outer holes 248 need not be large, since only a small part of the filtrate need to pass through there.

Preferably, there are also inner holes 247 in the radial walls 226, 228, 230, 232 inside the oblique wall 241 that are closer to the radially inner wall 218, 220. Experiments show that inner holes 247 placed closer to the anti-rewet insert 240 works better than inner holes 247 placed closer to the radially inner walls 218, 220. Further, experiments shows that said inner holes 247 gives a slightly larger effect on the anti-rewetting than said outer holes 248. From stability and strength reasons, a press roll 202, 204 can also withstand better having inner holes 247 at a distance from the periphery of the press roll 202, 204. Thus, the inner holes 247 are preferably more and/or larger than the outer holes 248. An advantage with the inner holes 247 and/or outer holes 248 is that when the filtrate channel 210, 212 is close to the nip or below the nip 238, a lot of the liquid will fall down through the inner holes 247 and/or outer holes 248. However, when the filtrate channel 210, 212 is above the nip 238, more of the liquid will stay in the filtrate channel 210, 212, thus preventing rewetting in the area of the nip 238.

According to the present invention, where outer holes 248 are arranged in the radial wall 226, 228, 230, 232 outside the oblique wall 241 and inner holes 247 are arranged in the radial wall 226, 228, 230, 232 inside the oblique wall 241, an effective anti-rewetting is achieved due to the co-operating effects between the inner holes 247 and the outer holes 248. The inner holes 247 and the outer holes 240 co-operates in that the smaller portion of the filtrate received in a filtrate channel 210 outside the oblique wall 241 is transported through the outer holes 248 and the filtrate that has not passed through the filtrate channel 210 falls through the inner holes 247 during the rotation of the press rolls. Thereby, accumulation of filtrate in any one filtrate channel 210, 212 is prevented and the filtrate channels 210, 212 will have sufficient capacity to transport and discharge the filtrate the intended way, and the rewetting of the pulp will be decreased. Further, by providing both the inner holes 247 and outer holes 248 these co-operating effects can be achieved at the same time as a high degree of stability and strength of the press rolls is maintained. That is, by distributing the holes on both sides of the oblique wall 241 an effective anti-rewetting effect is achieved at the same time as stability and strength of the press rolls is maintained.

In embodiments of the present invention where a total area of the inner holes 247 is larger than a total area of the outer holes 248 the high degree of stability and strength of the press rolls is improved in comparison with embodiments where the total area of the inner holes 247 is about the same as the total area of the outer holes 248.Preferably, the filtrate channels 210, 212 are also provided with a small tangential leg 244 parallel to the tangent of the mantle element 206, 208 and pointing in the same direction as the oblique wall 241. The tangential leg 244 may e.g. be a separate rib 244 welded to the mantle element 206, 208 or the radial wall 226, 228, 230, 232, as in Fig. 3b, or may e.g. be the last part of the radial wall 226, 228, 230, 232 bent in the same direction as the oblique wall 241. Any part of the tangential leg 244 pointing in the opposite direction as the oblique wall 241, should preferably be minimised in order to keep the inlet 245 as large as possible.

The tangential leg 244 should be small, so that it's not in the way when the manufacture is made, e.g. when the inner weldings are made. Preferably, the length of the tangential leg 244 is smaller than 20% of the distance between two subsequent radial walls 226, 228, 230, 232 along the mantle element 206, 208. Even if the tangential leg 244 is short, experiments show that it will still have an anti-rewetting effect.

It is possible to have a mantle element 206, 208 comprising simply a perforated plate. However, this means that the filtrate channels 210, 212 are simply filled and emptied as bowls. It is therefore preferable to have a mantle element 206, 208 comprising circumferential frame rings 246 distributed and spaced apart along the axis of each press roll 202, 204 with or without perforated plates on their inside and outside. This is preferable, since a part of the filtrate may then flow downwards along the rings 246 outside the inlets.

Experiments have been made where the oblique walls 241 comprised tongues extended into the spaces between the rings 246 in order to prevent the filtrate from flowing along the rings 246, because it was believed that it would be a disadvantage to have the filtrate flowing along the rings 246. However, the anti-rewetting effect is actually better if some of the filtrate is allowed to flow downwards along the rings 246 outside the inlets 245. Thus, the oblique walls 241 should preferably end before the outer perforated plate, if any, of the mantle element 206, 208, even if it does work also if the oblique walls 241 are longer.

This means that in the area near the nip 238 some of the filtrate flows downwards along the rings 246 outside the inlets 245, while most of the filtrate enters the inlets 245 to the filtrate channels 210, 212. Of the latter filtrate, some filtrate will fall down to the filtrate channel 210, 212 below through the inner and outer holes 247, 248, if any, while some filtrate will be lifted due to the rotation of the press roll 202, 204. This prevents accumulation of filtrate in any one filtrate channel 210, 212 and the filtrate channels 210, 212 will therefore have sufficient capacity to transport and discharge the filtrate the intended way, and the rewetting of the pulp will be decreased.

A further advantage with the anti-rewet insert 240 described above is the apparatus will be easy to clean with e.g. a flush pipe, since the anti-rewet insert 240 is placed at a distance from the mantle element 206, 208. This means that the anti-rewet insert 240 does not have to be removed for the cleaning. Rather, the anti-rewet insert 240 may be advantageously used for supporting the flush pipe during the cleaning.

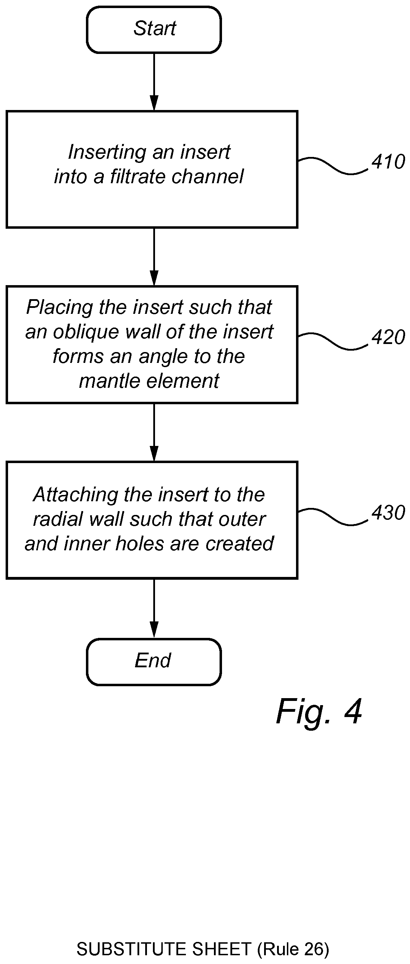

According to the present invention, there is provided a method for mounting the insert 240 in the apparatus for washing and/or dewatering pulp. Preferably, each filtrate channel 210, 212 is provided with an insert 240. In Fig. 4, the general steps of the method are presented. First, at step 410, the insert 240 is inserted into a filtrate channel 210, 212. Then, at step 420, the insert 240 is attached between a first radial wall 226, 230 and the mantle element 206, 208 such that the oblique wall 241 forms an angle q to the mantle element 206, 208 to prevent the flow of liquid from the filtrate channel 210, 212 to the outer surface of the mantle element 206, 208. Preferably, the insert 240 is attached or fastened by e.g. welding, screwing, bolting or other mechanical fastening. If the insert 240 is an exchangeable spare part, then screwing or bolting is preferred. In order to simplify, the screwing or bolting may then e.g. be made only at the ends, and using only e.g. pins or hooks in-between. Another advantage with using an insert 240 is that the insert 240 may easily be inserted also into existing old press rolls as an improvement.

In embodiments of the present invention illustrated in Fig. 5, the inserts 240 are attached to radial walls 226, 230 provided with one hole 500 such that the hole 500 is divided in outer holes 548 outside the oblique wall 241 and inner holes 547 inside the oblique wall 241.

The invention shall not be considered limited to the embodiments illustrated, but can be modified and altered in many ways by one skilled in the art, without departing from the scope of the appended claims.

## Claims

1. An apparatus for washing and/or dewatering pulp, the apparatus comprising two rotatable press rolls (202, 204) with a nip (238) between, each press roll (202, 204) including an axis (203, 205), a mantle element (206, 208) with permeable outer and inner surfaces, an axial inner drum (222, 224), and radial walls (226, 228, 230, 232) arranged between the mantle element (206, 208) and the axial inner drum (222, 224), so that axial filtrate channels (210, 212) are created between the mantle element (206, 208), the axial inner drum (222, 224) and the radial walls (226, 228, 230, 232), which filtrate channels (210, 212) are arranged to receive filtrate from the pulp, **characterized in that** each press roll (202, 204) is arranged to rotate with a direction of rotation (R₁, R₂), so that the pulp is arranged to be fed upwards through the nip (238); and **in that** at least one filtrate channel (210, 212) is provided with an oblique wall (241) between a first radial wall (226, 230) and the mantle element (206, 208), which oblique wall (241) points upwards at the nip (238) in the same direction as the direction of the rotation (R₁, R₂) to prevent the flow of liquid from the filtrate channel (210, 212) to the outer surface of the mantle element (206, 208), wherein the radial wall (226, 228, 230, 232) is provided with outer holes (248) outside the oblique wall (241) and inner holes (247) inside the oblique wall (241), wherein a total area of the inner holes (247) is larger than a total area of the outer holes (248).

2. An apparatus according to claim 1, **characterized in that** an inlet (245) is provided between the oblique wall (241) and a second radial wall (228, 232) in the same filtrate channel (210, 212).

3. An apparatus according to claim 1 or 2, **characterized in that** the oblique wall (241) is provided as part of a separate insert (240).

4. An apparatus according to claim 1, **characterized in that** the inner holes (247) are larger and/or more than the outer holes (248).

5. An apparatus according to any one of the preceding claims, wherein the oblique wall (241) forms an angle to the mantle element (206, 208) to prevent the flow of liquid from the filtrate channel (210, 212) to the outer surface of the mantle element (206, 208)

6. An apparatus according to any of the claims 1-5, **characterized in that** at least one radial wall (226, 228, 230, 232) is provided with a tangential leg (244) pointing in the direction of rotation (R₁, R₂).

7. An apparatus according to any of the claims 1-6, **characterized in that** the mantle element (206, 208) comprises circumferential frame rings (246) distributed and spaced apart along the axis (203, 205) of each press roll (202, 204)

8. Method for mounting an insert (240) in an apparatus for washing and/or dewatering pulp, the apparatus comprising two rotatable press rolls (202, 204) with a nip (238) between, each press roll (202, 204) including an axis (203, 205), a mantle element (206, 208) with permeable outer and inner surfaces, an axial inner drum (222, 224), and radial walls (226, 228, 230, 232) arranged between the mantle element (206, 208) and the axial inner drum (222, 224), so that axial filtrate channels (210, 212) are created between the mantle element (206, 208), the axial inner drum (222, 224) and the radial walls (226, 228, 230, 232), which filtrate channels (210, 212) are arranged to receive filtrate from the pulp, wherein each press roll (202, 204) is arranged to rotate with a direction of rotation (R₁, R₂), so that the pulp is arranged to be fed upwards through the nip (238), **characterized by**
inserting (410) said insert (240) into a filtrate channel (210, 212), wherein said insert (240) is provided with an oblique wall (241);
placing (420) said insert (240) between a first radial wall (226, 230) and the mantle element (206, 208) such that the oblique wall (241) forms an angle to the mantle element (206, 208) and points upwards at the nip (238) in the same direction as the direction of the rotation (R₁, R₂) to prevent the flow of liquid from the filtrate channel (210, 212) to the outer surface of the mantle element (206, 208); and
attaching (430) said insert (240) to the radial wall (226, 230) provided with at least one hole (247, 248; 500) such that outer holes (248; 548) outside the oblique wall (241) and inner holes (247; 547) inside the oblique wall (241) are created, wherein a total area of the inner holes (247;547) is larger than a total area of the outer holes (248, 548).

## Patentansprüche

1. Vorrichtung zum Waschen und/oder Entwässern von Zellstoff, wobei die Vorrichtung zwei drehbare Presswalzen (202, 204) mit einem Spalt (238) dazwischen umfasst, wobei jede Presswalze (202, 204) eine Achse (203, 205), ein Mantelelement (206, 208) mit durchlässigen äußeren und inneren Oberflächen, eine axiale innere Trommel (222, 224) und radiale Wände (226, 228, 230, 232) beinhaltet, die zwischen dem Mantelelement (206, 208) und der axialen inneren Trommel (222, 224) angeordnet sind, sodass axiale Filtratkanäle (210, 212) zwischen dem Mantelelement (206, 208), der axialen inneren Trommel (222, 224) und den radialen Wänden (226, 228, 230, 232) entstehen, wobei die Filtratkanäle (210, 212) so angeordnet sind, dass sie Filtrat aus dem Zellstoff empfangen, **dadurch gekennzeichnet, dass** jede Presswalze (202, 204) so angeordnet ist, dass sie sich mit einer Drehrichtung (R₁, R₂) dreht, sodass der Zellstoff so angeordnet ist, dass er durch den Spalt (238) nach oben geführt wird; und dadurch, dass mindestens ein Filtratkanal (210, 212) mit einer schrägen Wand (241) zwischen einer ersten radialen Wand (226, 230) und dem Mantelelement (206, 208) bereitgestellt wird, wobei die schräge Wand (241) am Spalt (238) in der gleichen Richtung wie die Drehrichtung (R₁, R₂) nach oben zeigt, um den Flüssigkeitsstrom aus dem Filtratkanal (210, 212) zu der äußeren Oberfläche des Mantelelements (206, 208) zu verhindern, wobei die radiale Wand (226, 228, 230, 232) mit äußeren Löchern (248) außerhalb der schrägen Wand (241) und inneren Löchern (247) innerhalb der schrägen Wand (241) bereitgestellt ist, wobei eine Gesamtfläche der inneren Löcher (247) größer als eine Gesamtfläche der äußeren Löcher (248) ist.

2. Vorrichtung nach Anspruch 1, **dadurch gekennzeichnet, dass** ein Einlass (245) zwischen der schrägen Wand (241) und einer zweiten radialen Wand (228, 232) in demselben Filtratkanal (210, 212) bereitgestellt wird.

3. Vorrichtung nach Anspruch 1 oder 2, **dadurch gekennzeichnet, dass** die schräge Wand (241) als Teil eines separaten Einsatzes (240) bereitgestellt ist.

4. Vorrichtung nach Anspruch 1, **dadurch gekennzeichnet, dass** die inneren Löcher (247) größer und/oder mehr sind als die äußeren Löcher (248).

5. Vorrichtung nach einem der vorhergehenden Ansprüche, wobei die schräge Wand (241) einen Winkel zum Mantelelement (206, 208) bildet, um den Flüssigkeitsstrom aus dem Filtratkanal (210, 212) zur äußeren Oberfläche des Mantelelements (206, 208) zu verhindern

6. Vorrichtung nach einem der Ansprüche 1-5, **dadurch gekennzeichnet, dass** mindestens eine radiale Wand (226, 228, 230, 232) mit einem tangentialen Schenkel (244) bereitgestellt wird, der in die Drehrichtung (R₁, R₂) zeigt.

7. Vorrichtung nach einem der Ansprüche 1-6, **dadurch gekennzeichnet, dass** das Mantelelement (206, 208) umlaufende Rahmenringe (246) umfasst, die entlang der Achse (203, 205) jeder Presswalze (202, 204) verteilt und beabstandet sind.

8. Verfahren zum Montieren eines Einsatzes (240) in einer Vorrichtung zum Waschen und/oder Entwässern von Zellstoff, wobei die Vorrichtung zwei drehbare Presswalzen (202, 204) mit einem Spalt (238) dazwischen umfasst, wobei jede Presswalze (202, 204) eine Achse (203, 205), ein Mantelelement (206, 208) mit durchlässigen äußeren und inneren Oberflächen, eine axiale innere Trommel (222, 224) und radiale Wände (226, 228, 230, 232) beinhaltet, die zwischen dem Mantelelement (206, 208) und der axialen inneren Trommel (222, 224) angeordnet sind, sodass axiale Filtratkanäle (210, 212) zwischen dem Mantelelement (206, 208), der axialen inneren Trommel (222, 224) und den radialen Wänden (226, 228, 230, 232) entstehen, wobei die Filtratkanäle (210, 212) so angeordnet sind, dass sie Filtrat aus dem Zellstoff empfangen, wobei jede Presswalze (202, 204) so angeordnet ist, dass sie sich mit einer Drehrichtung (R₁, R₂) dreht, sodass der Zellstoff so angeordnet ist, dass er durch den Spalt (238) nach oben geführt wird, **gekennzeichnet durch**
Einbauen (410) des Einsatzes (240) in einen Filtratkanal (210, 212), wobei der Einsatz (240) mit einer schrägen Wand (241) bereitgestellt ist;
Anordnen (420) des Einsatzes (240) zwischen einer ersten radialen Wand (226, 230) und dem Mantelelement (206, 208), sodass die schräge Wand (241) einen Winkel zum Mantelelement (206, 208) bildet und am Spalt (238) in der gleichen Richtung wie die Drehrichtung (R₁, R₂) nach oben zeigt, um den Flüssigkeitsstrom aus dem Filtratkanal (210, 212) zur äußeren Oberfläche des Mantelelements (206, 208) zu verhindern; und
Befestigen (430) des Einsatzes (240) an der radialen Wand (226, 230), die mit mindestens einem Loch (247, 248; 500) versehen ist, sodass äußere Löcher (248; 548) außerhalb der schrägen Wand (241) und innere Löcher (247; 547) innerhalb der schrägen Wand (241) erzeugt werden, wobei eine Gesamtfläche der inneren Löcher (247; 547) größer ist als eine Gesamtfläche der äußeren Löcher (248, 548).

## Revendications

1. Appareil de lavage et/ou déshydratation de la pulpe, l'appareil comprenant deux rouleaux presseurs rotatifs (202, 204) avec un pincement (238) entre, chaque rouleau presseur (202, 204) comprenant un axe (203, 205), un élément de manchon (206, 208) avec des surfaces extérieure et intérieure perméables, un tambour intérieur axial (222, 224) et des parois radiales (226, 228, 230, 232) agencées entre l'élément de manchon (206, 208) et le tambour intérieur axial (222, 224), de sorte que des canaux de filtrat axiaux (210, 212) sont créés entre l'élément de manchon (206, 208), le tambour intérieur axial (222, 224) et les parois radiales (226, 228, 230, 232), lesquels canaux de filtrat (210, 212) sont agencés pour recevoir le filtrat de la pulpe, **caractérisé en ce que** chaque rouleau presseur (202, 204) est agencé pour tourner dans une direction de rotation (R₁, R₂), de sorte que la pulpe est agencée pour être acheminée vers le haut à travers le pincement (238) ; et **en ce qu'**au moins un canal de filtrat (210, 212) est pourvu d'une paroi oblique (241) entre une première paroi radiale (226, 230) et l'élément de manchon (206, 208), laquelle paroi oblique (241) pointe vers le haut au niveau du pincement (238) dans la même direction que la direction de rotation (R₁, R₂) pour empêcher l'écoulement de liquide du canal de filtrat (210, 212) vers la surface extérieure de l'élément de manchon (206, 208), dans lequel la paroi radiale (226, 228, 230, 232) est pourvue de trous extérieurs (248) à l'extérieur de la paroi oblique (241) et de trous intérieurs (247) à l'intérieur de la paroi oblique (241), dans lequel une surface totale des trous intérieurs (247) est plus grande qu'une surface totale des trous extérieurs (248).

2. Appareil selon la revendication 1, **caractérisé en ce qu'**une entrée (245) est pourvue entre la paroi oblique (241) et une seconde paroi radiale (228, 232) dans le même canal de filtrat (210, 212).

3. Appareil selon la revendication 1 ou 2, **caractérisé en ce que** la paroi oblique (241) fait partie d'un insert séparé (240).

4. Appareil selon la revendication 1, **caractérisé en ce que** les trous intérieurs (247) sont plus grands et/ou plus nombreux que les trous extérieurs (248).

5. Appareil selon l'une quelconque des revendications précédentes, dans lequel la paroi oblique (241) forme un angle avec l'élément de manchon (206, 208) pour empêcher l'écoulement de liquide du canal de filtrat (210, 212) vers la surface extérieure de l'élément de manchon (206, 208).

6. Appareil selon l'une quelconque des revendications 1 à 5, **caractérisé en ce qu'**au moins une paroi radiale (226, 228, 230, 232) est munie d'une branche tangentielle (244) pointant dans la direction de rotation (R₁,R₂).

7. Appareil selon l'une quelconque des revendications 1 à 6, **caractérisé en ce que** l'élément de manchon (206, 208) comprend des anneaux de cadre circonférentiels (246) répartis et espacés le long de l'axe (203, 205) de chaque rouleau presseur (202, 204) .

8. Méthode de montage d'un insert (240) dans un appareil de lavage et/ou déshydratation de la pulpe, l'appareil comprenant deux rouleaux presseurs rotatifs (202, 204) avec un pincement (238) entre, chaque rouleau presseur (202, 204) comprenant un axe (203, 205), un élément de manchon (206, 208) avec des surfaces extérieure et intérieure perméables, un tambour intérieur axial (222, 224) et des parois radiales (226, 228, 230, 232) agencées entre l'élément de manchon (206, 208) et le tambour intérieur axial (222, 224), de sorte que des canaux de filtrat axiaux (210, 212) sont créés entre l'élément de manchon (206, 208), le tambour intérieur axial (222, 224) et les parois radiales (226, 228, 230, 232), lesquels canaux de filtrat (210, 212) sont agencés pour recevoir le filtrat de la pulpe, dans lequel chaque rouleau presseur (202, 204) est agencé pour tourner dans la direction de rotation (R₁, R₂), de sorte que la pulpe est agencée pour être acheminée vers le haut à travers le pincement (238), **caractérisé par**
l'insertion (410) dudit insert (240) dans un canal de filtrat (210, 212), dans lequel ledit insert (240) est pourvu d'une paroi oblique (241) ;
le placement (420) dudit insert (240) entre une première paroi radiale (226, 230) et l'élément de manchon (206, 208) de sorte que la paroi oblique (241) forme un angle avec l'élément de manchon (206, 208) et pointe vers le haut au niveau du pincement (238) dans la même direction que la direction de rotation (R₁, R₂) pour empêcher l'écoulement de liquide depuis le canal de filtrat (210, 212) vers la surface extérieure de l'élément de manchon (206, 208) ; et
la fixation (430) dudit insert (240) à la paroi radiale (226, 230) pourvue d'au moins un trou (247, 248 ; 500) de sorte que des trous extérieurs (248 ; 548) à l'extérieur de la paroi oblique (241) et des trous intérieurs (247 ; 547) à l'intérieur de la paroi oblique (241) sont créés, une surface totale des trous intérieurs (247 ; 547) étant supérieure à une surface totale des trous extérieurs (248, 548).
